# EUROPÄISCHE PATENTANMELDUNG

(11) **EP 3 355 076 A1**
(43) Veröffentlichungstag der Anmeldung: **01.08.2018**
(21) Anmeldenummer: 17209614.1
(22) Anmeldetag: 21.12.2017
(51) Int. Cl.: G01S 7/486, G01S 17/10, G01S 7/481, G01S 7/497, G01S 17/89

(54) **OPTOELEKTRONISCHER SENSOR UND VERFAHREN ZUR BESTIMMUNG DER ENTFERNUNG EINES OBJEKTS IN EINEM ÜBERWACHUNGSBEREICH**

(30) Priorität: 26.01.2017 DE 102017101501
(71) Anmelder: Sick AG, 79183 Waldkirch (DE)
(72) Erfinder: Zwölfer, Ulrich, 79183 Waldkirch (DE); Bohli, Alexander, 79183 Waldkirch (DE); Albert, Michael, 79183 Waldkirch (DE)

(57) **Zusammenfassung**

Es wird ein optoelektronischer Sensor (10) zur Bestimmung der Entfernung eines Objekts (18) mit einem Lichtsender (12) zum Aussenden eines Lichtpulses (14), mit einem SPAD-Lichtempfänger (22) mit einem Messempfangselement (24) und einem Referenzempfangselement (24a) sowie mit einer Auswertungseinheit (26) angegeben, die dafür ausgebildet ist, aus den Empfangssignalen des Messempfangselements (24) und des Referenzempfangselements (24a) eine Lichtlaufzeit zwischen Aussenden des Lichtpulses (14) und Empfangen des remittierten Lichtpulses (20) und daraus den Abstand des Objekts (18) zu bestimmen. Dabei ist die Auswertungseinheit (26) weiterhin dafür ausgebildet, mit einem elektrischen Startsignal eine Referenzzeitmessung und eine Lichtlaufzeitmessung zu beginnen, die Referenzzeitmessung mit Empfang des Referenzpulses auf dem Referenzempfangselement (24a) und die Lichtlaufzeitmessung mit Empfang des remittierten Lichtpulses (20) auf dem Messempfangselement (24) zu beenden und die Lichtlaufzeit als Differenz der Ergebnisse der Lichtlaufzeitmessung und der Referenzzeitmessung zu bestimmen.

## Beschreibung

Die Erfindung betrifft einen optoelektronischen Sensor und ein Verfahren zur Bestimmung der Entfernung eines Objekts in einem Überwachungsbereich nach dem Oberbegriff von Anspruch 1 beziehungsweise 11.

Optoelektronische Sensoren gibt es in einem breiten Spektrum, das von eindimensionalen Lichtschranken und Lichttastern über Laserscanner bis zu Kameras reicht. Über die reine Objekterfassung hinaus wird in entfernungsmessenden Systemen auch eine Distanz zu dem Objekt bestimmt. Distanzsensoren nach dem Lichtlaufzeitprinzip messen dazu die Laufzeit eines Lichtsignals, die über die Lichtgeschwindigkeit der Entfernung entspricht. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Wichtige Parameter für entfernungsmessende Sensoren sind hohe Reichweiten und die Fähigkeit, starke wie auch schwach remittierende Objekte zu erkennen. Die Spanne zwischen nahen und fernen Objekten, zudem unterschiedlichen Remissionen etwa von glänzenden Flächen bis hinunter zu beispielsweise schwarzem Samt ist erheblich. Es besteht daher ein Bedarf an hochempfindlichen Empfangssystemen, die möglichst schon wenige Photonen detektieren und zudem sehr große Dynamikbereiche von > 100 dB abdecken.

Herkömmlich werden zur Steigerung der Empfindlichkeit in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Bezüglich dieser und weiterer allgemeiner Eigenschaften von SPADs sei beispielhaft auf den Artikel Eisele, Andreas, et al. "185 MHz count rate, 139 dB dynamic range single-photon avalanche diode with active quenching circuit in 130 nm CMOS technology." Int. Image Sensor Workshop (IISW), Onuma, Hokkaido, 2011 verwiesen.

Eine SPAD zählt somit wie ein Geigerzähler Einzelereignisse. SPADs sind nicht nur hochempfindlich mit Verstärkungsfaktoren bis zu 10⁸, sondern auch vergleichsweise kostengünstig. Zudem lassen sie sich mit wenig Aufwand auf einer Leiterkarte integrieren. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal. Um diese Auswirkungen zu begrenzen, werden in der Praxis mehrere SPADs gemeinsam ausgewertet.

Zur genauen Lichtlaufzeitbestimmung muss nicht nur der Empfangszeitpunkt, sondern auch der Startzeitpunkt sehr genau bekannt sein. Hier ergeben sich aufgrund von Umgebungsveränderungen nicht konstante Verzögerungen in den elektrischen Signalwegen und dem tatsächlichen Zeitpunkt der optischen Pulserzeugung. Deshalb besitzen einige bekannte entfernungsmessende Sensoren einen optischen Referenzpfad. In der EP 2 475 957 B1 wird derselbe SPAD-Lichtempfänger für Messung und Kalibrierung verwendet. Der Referenzpfad kann aber nur durch variable Strahlumlenkspiegel anstelle des Messpfades genutzt werden. Eine echte Referenz im Sinne eines Startzeitpunkts für dieselbe Messung liefert das nicht, so dass PVT-Instabilitäten oder sonstige Veränderungen auf kurzen Zeitskalen nicht berücksichtigt werden.

Die EP 2 017 651 B2 offenbart eine Lichtlaufzeitkamera, deren Bildsensor mehrere Referenzpixel unterschiedlicher Empfindlichkeit aufweist, die von den übrigen Pixel durch eine optische Abschirmung separiert sind. Die Referenz bezieht sich aber hier nicht auf die Lichtlaufzeit, sondern auf die Intensität. Da ein Phasenverfahren eingesetzt wird, könnte sich auch gar kein sinnvoller Referenzzeitpunkt ergeben, denn bei einem Phasenverfahren kommt es nicht darauf an, wann der Lichtsender aktiviert wird.

Im Idealfall ist ein entfernungsmessender Sensor in der Lage, direkt ab der Sensorfrontscheibe und damit ab der Entfernung Null messen beziehungsweise schalten zu können. Nun haben aber die Lichtpulse eine Halbwertsbreite, die typischerweise nicht unter 500 ps liegt. Kurze Lichtlaufzeiten innerhalb dieses Zeitbereichs lassen sich wegen optischer Überlappungen von Sende- und Empfangspuls mit herkömmlichen Empfangsschaltungen nicht bestimmen. Damit ergibt sich ein Blindbereich für sehr kurze Entfernungen, in dem keine Messwerte geliefert werden. Beispielsweise entsprechen die genannten 500 ps einem doppelten Lichtweg hin und zurück von 7,5 cm. Prinzipiell kann man den Blindbereich durch kleinere Pulsweiten weiter reduzieren. Das stößt aber auf technische und noch zuvor auf wirtschaftliche Grenzen.

Es ist daher Aufgabe der Erfindung, die Lichtlaufzeitmessung in einem entfernungsmessenden Sensor zu verbessern.

Diese Aufgabe wird durch einen optoelektronischen Sensor und ein Verfahren zur Bestimmung der Entfernung eines Objekts in einem Überwachungsbereich nach Anspruch 1 beziehungsweise 11 gelöst.

Ein gattungsgemäßer Sensor misst wie üblich durch Aussenden und Empfangen von Lichtpulsen die Lichtlaufzeit bis zu einem Objekt und bestimmt daraus über die konstante Lichtgeschwindigkeit dessen Abstand. Dabei sind auch kompliziertere Formen wie Doppelpulse oder sogar Pulscodes denkbar. Die Lichtempfangselemente sind Lawinenphotodiodenelemente, die jeweils mit einer Vorspannung oberhalb einer Durchbruchspannung vorspannbar und somit in einem Geiger-Modus betreibbar sind, oder anders ausgedrückt SPADs. Mindestens ein Lichtempfangselement empfängt als Referenzempfangselement einen Teil des Lichtpulses als Referenzpuls direkt, also innerhalb des Sensors ohne den Lichtweg bis zum Objekt und zurück, um so interne Verzögerungen und Driften zu berücksichtigen. Mindestens ein weiteres Lichtempfangselement ist für den Empfang des von dem Objekt remittierten Lichtpulses vorgesehen.

Die Erfindung geht nun von dem Grundgedanken aus, eine gesonderte Referenzzeitmessung und Lichtlaufzeitmessung durchzuführen und anschließend die Differenz zu bilden. Dazu werden beide Zeitmessungen durch ein elektrisches Startsignal gemeinsam begonnen, insbesondere dem elektrischen Startsignal oder Lasertrigger für das Erzeugen des ausgesandten Lichtpulses. Beendet werden die Zeitmessungen durch Empfang des Referenzpulses beziehungsweise des remittierten Lichtpulses. Der Startzeitpunkt der Zeitmessungen fällt dann durch Differenzbildung heraus, und es verbleibt genau die Lichtlaufzeit auf der optischen Messstrecke zwischen Sensor und Objekt.

Die Erfindung hat den Vorteil, dass durch die beiden getrennten Zeitmessungen ein Blindbereich für sehr nahe Entfernungen vermieden wird. Die Erkennung und Messung von Objekten bis an die Sensorfrontscheibe heran ist dabei unabhängig von der Sendepulsbreite möglich. Jegliche interne Verzögerungen einschließlich Schwankungen (PVT) sind durch die Referenzzeitmessung berücksichtigt. Die extrem hohe Empfindlichkeit der Lawinenphotodiodenelemente im Geigermodus sorgt dafür, dass Messungen auch bei großen Reichweiten beziehungsweise schwacher Remission möglich bleiben. Ein gepulstes System bietet gegenüber einem Phasenverfahren Vorteile hinsichtlich gegenseitiger Beeinflussung und Mehrdeutigkeitsproblematiken. Das Messsystem kann sehr kompakt in einem Gehäuse, das Empfangssystem sogar auf einem einzigen Chip realisiert werden. Der Lichtempfänger und damit der Sensor kann robust und kostengünstig hergestellt werden.

Die Auswertungseinheit ist bevorzugt dafür ausgebildet, die Lichtlaufzeitmessung mit einer Flanke des elektrischen Startsignals zu beginnen und/oder mit einer Flanke des remittierten Lichtpulses zu beenden, insbesondere jeweils der ersten Flanke. Die Verwendung einer Flanke als Auslöser macht gänzlich unabhängig von der Pulsbreite. Die auf die Flanke des Pulses folgende Form und Dauer hat auf die Zeitmessungen keinen Einfluss mehr. Deshalb ist besonders vorteilhaft, die erste, bei üblicher Pulsform steigende Flanke am Pulsanfang zu verwenden.

Die Auswertungseinheit ist bevorzugt dafür ausgebildet, die Referenzzeitmessung mit einer Flanke des elektrischen Startsignals zu beginnen und/oder mit einer Flanke des Referenzpulses zu beenden, insbesondere jeweils der ersten Flanke. Damit bezieht sich die Referenzzeitmessung auf eine Flanke, mit den bereits genannten Vorteilen und zusätzlich einer verbesserten Vergleichbarkeit von Referenzzeitmessung und Lichtlaufzeitmessung

Die Auswertungseinheit ist bevorzugt dafür ausgebildet, eine Vielzahl von Lichtlaufzeitmessungen mit einer Vielzahl von Messempfangselementen oder Gruppen von Messempfangselementen durchzuführen und die derart ermittelten Lichtlaufzeiten gemeinsam auszuwerten, um den Abstand des Objekts zu bestimmen. Somit erfolgt eine statistische Auswertung über die verschiedenen Messempfangselemente beispielsweise durch Aufsummieren beziehungsweise Kumulieren aller Lichtlaufzeitmessungen in einem Histogramm mit anschließender Auswertung des Histogramms. Da einzelne Lawinenphotodiodenelemente im Geiger-Modus durch ein Zufalls- oder Dunkelrauschereignis auslösen können, kann es vorteilhaft sein, mehrere Lawinenphotodiodenelemente zu einer Gruppe zusammenzufassen und gemeinsam eine Lichtlaufzeitmessung durchführen zu lassen.

Die Auswertungseinheit ist bevorzugt dafür ausgebildet, die Referenzlaufzeitmessung und Lichtlaufzeitmessung zu wiederholen und die derart ermittelten Lichtlaufzeiten gemeinsam auszuwerten, um den Abstand des Objekts zu bestimmen. Dadurch ergibt sich eine größere statistische Basis und damit verbesserte Messgenauigkeit zusätzlich oder alternativ zu einer Mehrfachmessung durch eine Vielzahl von Messempfangselementen.

Vorteilhafterweise ist eine Vielzahl von Referenzempfangselementen vorgesehen, und die Auswertungseinheit beendet die Referenzzeitmessung, sobald eine Mindestanzahl von Referenzempfangselementen den Referenzpuls empfangen hat. Im Gegensatz zu einer Vielzahl von Messempfangselementen, die auch in großer Zahl von vielen tausend und mehr nützlich sein können, genügen schon einige, beispielsweise vier bis acht Referenzempfangselemente. Diese entscheiden dann gemeinsam, wann der Referenzpuls empfangen wurde, etwa sobald eine Mindestanzahl m der insgesamt n Referenzempfangselemente ausgelöst haben, im Grenzfall insbesondere durch UND-Verknüpfung aller n Referenzempfangselemente. Der Zweck einer solchen oder anderen kollektiven Entscheidung der Referenzempfangselemente ist, zuverlässig zwischen Empfang des Referenzpulses und einem Zufallsereignis zu unterscheiden. Ein einzelnes Referenzempfangselement könnte beispielsweise durch Dunkelrauschen ausgelöst werden und dann eine praktisch beliebige Referenzzeitmessung liefern.

Vorzugsweise ist eine Vielzahl von Referenzempfangselementen vorgesehen, und die Auswertungseinheit führt die Referenzzeitmessung mehrfach mit den Referenzempfangselementen oder Gruppen von Referenzempfangselementen durch. Dadurch ergibt sich durch Mittelung oder dergleichen ein genaueres Ergebnis der Referenzzeitmessung. Die Referenzzeitmessung über eine Gruppe von Referenzempfangselementen soll erneut die Gefahr ausgleichen, dass ein einzelnes Referenzempfangselement durch ein Zufallsereignis einen beliebigen Wert beiträgt.

Die Auswertungseinheit weist bevorzugt jeweils mindestens einen TDC für die Referenzzeitmessung und die Lichtlaufzeitmessung auf. TDCs (Time-to-Digital Converter) sind bewährte Bauteile, um die Zeitmessungen durchzuführen und die praktisch als Stoppuhren arbeiten, die durch das elektrische Startsignal und den Referenzpuls beziehungsweise den remittierten Lichtpuls gestartet und gestoppt werden. Die TDCs können einem Lichtempfangselement, einer Gruppe von Lichtempfangselementen oder variabel zugeordnet sein. Vorzugsweise sind sie direkt bei den Pixeln oder Lichtempfangselementen oder zumindest auf demselben Chip implementiert.

In dem Sensor ist bevorzugt ein Lichtrückführelement angeordnet, um den Referenzpuls auf das Referenzempfangselement zu leiten. So wird der ausgesandte Lichtpuls teilweise gleichsam optisch kurzgeschlossen. Das Lichtrückführelement kann auf verschiedene Weise ausgeführt sein, etwa als eine Art Senderohr oder als Spiegel.

Das mindestens eine Referenzempfangselement ist bevorzugt durch eine optische Barriere von den übrigen Lichtempfangselementen separiert. Dadurch wird optisches Übersprechen vermieden. Der Referenzpuls kann demnach nicht die Messempfangselemente und der remittierte Lichtpuls nicht die Referenzempfangselemente treffen, wobei letzteres wegen der zeitlichen Abfolge für die Messung kaum noch bedeutsam wäre. Lawinenphotodiodenelemente im Geigermodus sind besonders empfindlich gegenüber optischem Übersprechen, weil sie in ihre Totzeit versetzt werden und dann möglicherweise für die eigentliche Messung nicht mehr verfügbar sind.

Der Sensor ist bevorzugt als Laserscanner mit einem Lichtsender und einer beweglichen Ablenkeinheit zur periodischen Ablenkung des Lichtstrahls in dem Überwachungsbereich ausgebildet. Als Scanmechanismus kommen alle bekannten Konzepte wie Schwing- und Drehspiegel oder beweglicher Messkopf in Betracht. Üblicherweise wird auch das Empfangslicht periodisch abgelenkt, wobei es aber auch Scanner gibt, die einen statischen Matrixchip benutzen und durch elektronische Ansteuerung je nach Messrichtung eine aktive Pixelgruppe nachführen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines entfernungsmessenden Sensors in koaxialer Anordnung;
- Fig. 2: eine schematische Darstellung eines entfernungsmessenden Sensors in einer alternativen biaxialen Anordnung;
- Fig. 3: eine schematische Darstellung eines entfernungsmessenden Sensors in einer Ausführungsform als Laserscanner;
- Fig. 4: ein vereinfachtes Ersatzschaltbild einer einzelnen Lawinenphotodiode im Geiger-Modus zur Erläuterung von deren Funktionsprinzip;
- Fig. 5: eine Blockdarstellung des Empfangspfades eines entfernungsmessenden Sensors mit Referenz- und Messkanal; und
- Fig. 6: eine Darstellung der Signale an verschiedenen Punkten des Empfangspfades gemäß Figur 5 zur Erläuterung des Messverfahrens.

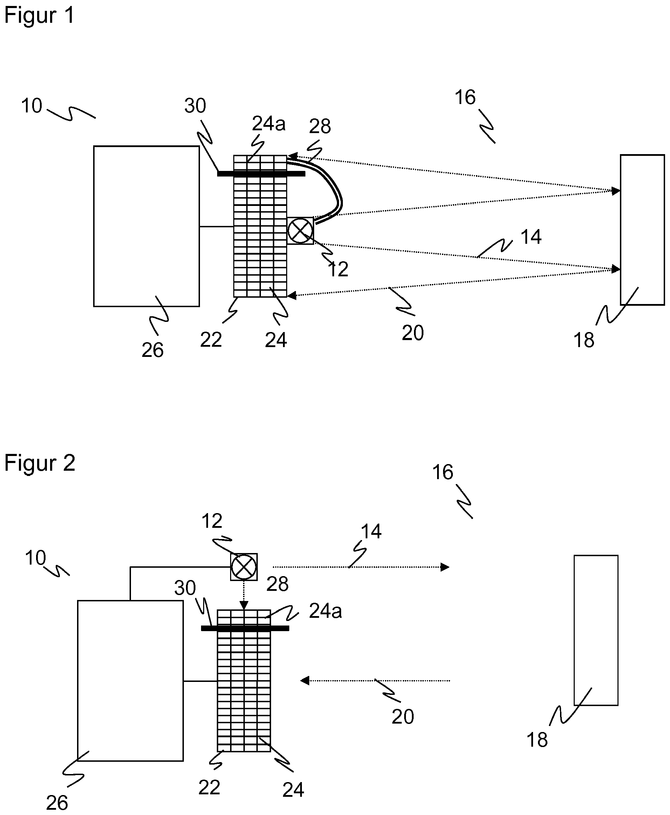

Figur 1 zeigt eine vereinfachte schematische Blockdarstellung eines optoelektronischen Sensors 10 in einer Ausführungsform als einstrahliger Lichttaster. Ein Lichtsender 12, beispielsweise eine LED oder eine Laserlichtquelle, sendet einen Lichtpuls 14 in einen Überwachungsbereich 16 aus. Trifft er dort auf ein Objekt 18, so wird ein Teil des Lichtpulses remittiert oder reflektiert und kehrt als remittierter Lichtpuls 20 zu einem Lichtempfänger 22 zurück. Dieser Lichtempfänger 22 weist eine Vielzahl von Lichtempfangselementen 24, 24a auf, die vorzugsweise als Lawinenphotodioden im Geigermodus oder SPADs ausgebildet sind. Die Empfangssignale der Lichtempfangselemente 24, 24a werden von einer Steuer- und Auswertungseinheit 26 ausgelesen und dort ausgewertet.

Ein Lichtrückführelement 28, hier beispielhaft in Form eines Lichtleiters, führt einen Teil des ausgesandten Lichtpulses 14 direkt als Referenzpuls auf den Lichtempfänger 22 zurück. Die von dem Referenzpuls getroffenen Lichtempfangselemente werden manchmal als Referenzempfangselemente 24a, die übrigen Lichtempfangselemente als Messempfangselemente 24 bezeichnet. Dazwischen ist optional eine optische Barriere 30 vorgesehen, um optisches Übersprechen oder Eigenblendung zu verhindern. Die Referenzempfangselemente 24a sollten vorzugsweise zusätzlich gut gegen Fremdlicht geschützt liegen oder werden.

Der in Figur 1 dargestellte Lichtempfänger 22 ist einteilig, insbesondere ein einziger Chip, der sowohl die Messempfangselemente 24 als auch die Referenzempfangselemente 24a umfasst. Alternativ kann jeweils ein Empfangselement, vorzugsweise SPAD-Array für die Messempfangselemente 24 und die Referenzempfangselemente 24a vorgesehen sein. Das erhöht den baulichen Aufwand ein wenig, erleichtert aber die optisch Trennung.

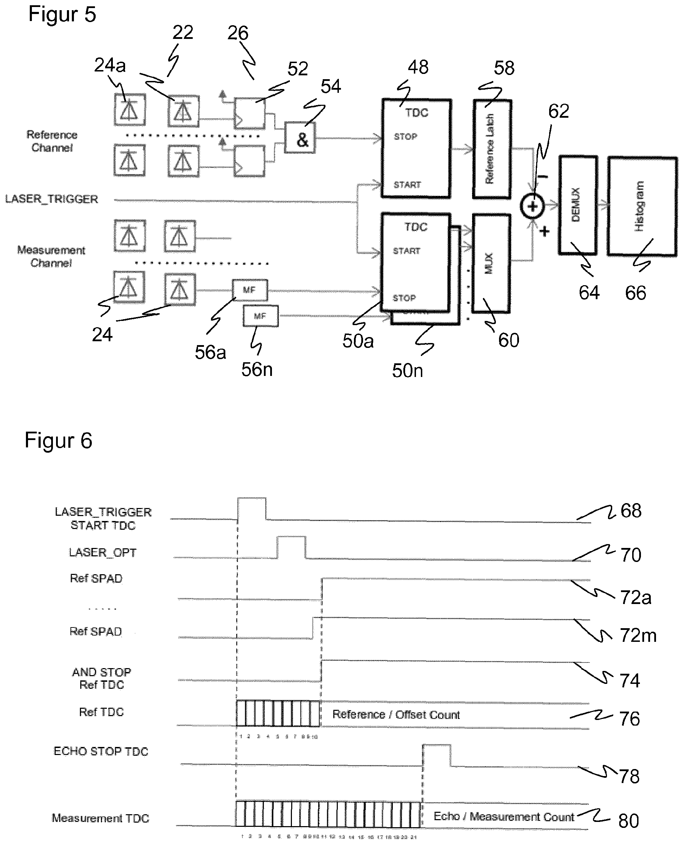

Der Sensor 10 ist entfernungsmessend. Dazu bestimmt die Steuer- und Auswertungseinheit 26 eine Lichtlaufzeit vom Aussenden des Lichtpulses 14 bis zum Empfang des remittierten Lichtpulses 20 und rechnet dies über die Lichtgeschwindigkeit in einen Abstand um. Bei dieser Entfernungsmessung wird die Referenzinformation des in den Referenzempfangselementen 24a empfangenen Referenzpulses berücksichtigt. Die Lichtlaufzeitmessung wird später unter Bezugnahme auf die Figuren 5 und 6 näher erläutert.

Der Sensor 10 weist in einer praktischen Ausführungsform weitere Elemente auf, insbesondere Sende- und Empfangsoptiken und Anschlüsse, auf die hier vereinfachend nicht eingegangen wird. Die Auftrennung in Lichtempfänger 22 und Steuer- und Auswertungseinheit 26 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodioden und einzelnen oder Gruppen von Lawinenphotodioden zugeordnete Schaltkreise zu deren Auswertung und Ansteuerung teilen. Sämtliche Bauteile können kompakt in einem Sensor 10 und insbesondere in einem Gehäuse untergebracht werden.

In Figur 1 wird eine koaxiale Anordnung beispielhaft durch Anordnung des Lichtsenders 12 vor dem Lichtempfänger 22 erreicht. Alternative koaxiale Anordnungen etwa durch Teilerspiegel sind ebenso möglich.

Figur 2 zeigt eine schematische Blockdarstellung einer weiteren Ausführungsform des optoelektronischen Sensors 10 mit einer biaxialen Anordnung. Dabei bezeichnen hier und im Folgenden gleiche Bezugszeichen die gleichen oder einander entsprechende Merkmale, die nicht erneut erläutert werden. In der biaxialen oder Doppelaugenanordnung liegen Lichtsender 12 und Lichtempfänger 22 nebeneinander. Figur 2 soll in erster Linie die Variantenvielfalt des konstruktiven Aufbaus des Sensors 10 illustrieren und darlegen, dass die Erfindung nicht auf einen bestimmten Aufbau beschränkt ist.

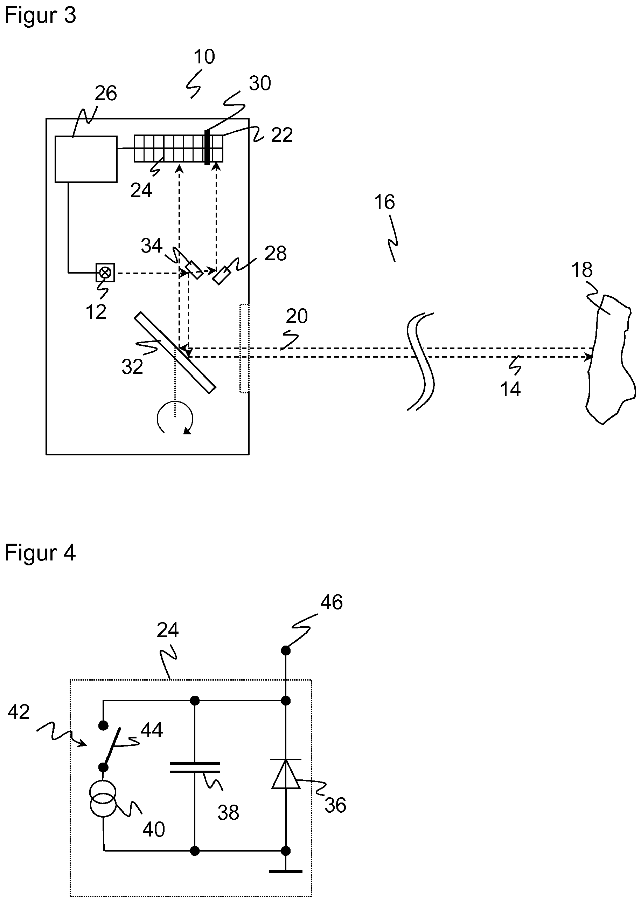

Figur 3 zeigt einen Laserscanner als weitere Ausführungsform des optoelektronischen Sensors 10. Der ausgesandte Lichtpuls 14 und der remittierte Lichtpuls 20 werden hier mit Hilfe eines Drehspiegels 32 periodisch durch den Überwachungsbereich 16 geführt, um eine Ebene abzuscannen. Im Sendepfad ist eine weitere Ablenkeinheit 34 vorgesehen, um den ausgesandten Lichtpuls auf den Drehspiegel 32 zu lenken. Herkömmlich ist das ein einfacher kleiner Spiegel, der nun durch einen Teilerspiegel ersetzt ist. Dadurch wird ein Teil des ausgesandten Lichtpulses 14 transmittiert und erreicht direkt als Referenz über ein als Umlenkspiegel ausgebildetes Lichtrückführelement 28 den Lichtempfänger 22. Diese Lichtführung könnte auch bei einem einstrahligen Taster eingesetzt werden und unterstreicht nochmals, dass die jeweils dargestellten Aufbauten und Lichtrückführelemente 28 rein beispielhaft sind.

Es sind zahlreiche abweichende Aufbauten von Laserscannern möglich, beispielsweise mit einem drehbaren Polygonspiegelrad oder einem insgesamt drehenden Messkopf mit Lichtsender 12 und/oder Lichtempfänger 22. Es gibt auch andere Möglichkeiten, die Entfernungsmessung auf einen größeren Überwachungsbereich 16 zu erweitern. So können mehrere einstrahlige Systeme nach Figur 1 oder 2 kombiniert werden, um ein tastendes Lichtgitter mit mehreren, meist parallelen Strahlen zu bilden, welches in jedem Strahl Entfernungen misst oder überwacht. Es kann mit den Lawinenphotodioden 24 einzeln oder gruppenweise ortsaufgelöst gemessen werden, so dass eine 3D-Kamera entsteht. Auch mobile Systeme sind denkbar, bei denen der Sensor 10 beweglich montiert ist.

Figur 4 zeigt ein beispielhaftes vereinfachtes Ersatzschaltbild einer einzelnen Lawinenphotodiode 24 im Geiger-Modus. In der Praxis handelt es sich um ein Halbleiterbauteil, dessen nicht dargestellter Aufbau hier als bekannt vorausgesetzt wird. Die Lawinenphotodiode 24 zeigt zum einen das Verhalten einer Diode 36. Sie hat eine Kapazität, die durch einen parallel geschalteten Kondensator 38 repräsentiert wird. Der mögliche Lawinendurchbruch erzeugt Ladungsträger, deren Ursprung in dem Ersatzschaltbild als Stromquelle 40 dargestellt wird. Der Lawinendurchbruch wird durch ein auftreffendes Photon 42 ausgelöst, wobei dieser Vorgang wie ein Schalter 44 wirkt. Es gibt dann verschiedene Möglichkeiten, das Ausgangssignal 46 zu betrachten, auf die hier nicht näher eingegangen wird.

Im Bereitschaftszustand liegt über der Diode 36 eine Spannung oberhalb der Durchbruchspannung an. Erzeugt dann ein einfallendes Photon 42 ein Ladungsträgerpaar, so schließt dies gleichsam den Schalter 44, so dass die Lawinenphotodiode 24 über die Stromquelle 40 mit Ladungsträgern geflutet wird. Neue Ladungsträger entstehen aber nur, solange das elektrische Feld stark genug bleibt. Wird durch die Stromquelle 40 der Kondensator 38 so weit entladen, dass die Durchbruchspannung unterschritten ist, so kommt die Lawine von selbst zum Erliegen ("passive quenching"). Danach lädt sich der Kondensator 38 wieder auf, bis wieder eine Spannung über der Durchbruchspannung an der Diode 36 anliegt. Es gibt alternative Ausgestaltungen, in denen die Lawine von außen erkannt und daraufhin eine Entladung unter die Durchbruchspannung ausgelöst wird ("active quenching"). Eine Lawinenphotodiode 24 hat somit die Fähigkeit, sogar einzelne Photonen zu detektieren, und eignet sich daher für einen hochempfindlichen Lichtempfänger 22.

Figur 5 zeigt eine Blockdarstellung eines Empfangssystems mit Lichtempfänger 22 und Auswertungseinheit 26. Wie bereits erwähnt, können Schaltungen für die Auswertung direkt in oder bei einzelnen Lichtempfangselementen 24, 24a oder Gruppen davon implementiert sein, so dass das Empfangssystem 22, 26 einen gemeinsamen Chip bilden kann. Die konkret gezeigte Anordnung impliziert also keine Festlegung auf ein bestimmtes Layout insbesondere in Bezug auf die Lage von lichtempfindlichen Bereichen und Auswertungsbereichen. Alternativ erfolgt die Auswertung teilweise oder vollständig außerhalb eines Chips des Lichtempfängers 22.

Im oberen Teil der Figur 5 ist der Referenzkanal mit den Referenzempfangselementen 24a, im unteren der Messkanal mit den Messempfangselementen 24 und jeweils zugehörigen Auswertungselementen dargestellt. Ganz rechts werden die Informationen aus Referenzkanal und Messkanal zusammengeführt.

Ein elektrisches Startsignal, hier der Lasertrigger, der auch den Lichtsender 12 für die Erzeugung des ausgesandten Lichtpulses 14 ansteuert, wird auf den START-Eingang von TDC-Bausteinen 48, 50a-n gelegt. Somit starten simultan eine Referenzzeitmessung für den Referenzkanal und mehrere Lichtlaufzeitmessungen für Gruppen von Messempfangselementen 24 im Messkanal. Stattdessen kann mit TDC-Bausteinen 48, 50a-n auch der Start- und Empfangszeitpunkt auf beliebige andere Weise festgestellt oder gespeichert werden, um die Lichtlaufzeit als deren Differenz zu bestimmen.

Die Empfangssignale der Referenzempfangselemente 24a werden einem Flankendetektor 52 zugeführt. Anschließend erfolgt eine UND-Verknüpfung 54. Somit erzeugt der Referenzkanal ein gemeinsames Stoppsignal, sobald alle Referenzempfangselemente 24a die erste Flanke des Referenzpulses registriert haben, das auf den STOP-Eingang des zuständigen TDC-Bausteins 48 geführt ist. In alternativen Ausführungsformen kann schon eine Mindestanzahl m von n Referenzempfangselementen 24a anstelle von allen Referenzempfangselementen 24a für das Stopsignal genügen. Außerdem ist denkbar, mehrere Auslösesignale von mehreren Referenzempfangselementen 24a oder Gruppen von Referenzempfangselementen 24a zu erzeugen. Damit können dann mit Hilfe von zusätzlichen TDC-Bausteinen mehrere Referenzzeitmessungen statt nur einer Referenzzeitmessung durchgeführt werden, deren Ergebnisse beispielsweise gemittelt werden.

In ähnlicher Weise werden die Empfangssignale mehrerer Messempfangselemente 24 zusammengefasst und ausgewertet, um mit Empfang des remittierten Lichtpulses 14 ein Stopsignal für den STOP-Eingang der im Messkanal zuständigen TDC-Bausteine 50a-n zu erzeugen. Dazu wird ebenfalls vorzugsweise die erste Flanke detektiert und eine gemeinsame Entscheidung für die zusammengefassten Messempfangselemente 24 getroffen. In Figur 5 ist diese Auswertung und Zusammenfassung vereinfachend als jeweiliges Gruppenschaltelement 56a-n beispielsweise mit zeitlicher Monoflopfunktion dargestellt. Dabei kann ebenfalls eine m-aus-n-Entscheidung getroffen, alternativ ein Summensignal erzeugt werden, oder bestimmte Messempfangselemente 24 werden in einem Multiplexing mit den TDC-Bausteinen 56a-n verbunden. Die mehreren Gruppen, hier beispielhaft Zeilen, von Messempfangselementen 24 führen zu mehreren Messungen der Lichtlaufzeit. Das kann für eine statistische Auswertung, aber auch eine Ortsauflösung oder beides verwendet werden.

Im Referenzkanal steht nach der Referenzzeitmessung an einem Referenzspeicher 58 die gemessene Referenzzeit zwischen Lasertrigger und Empfang des Referenzpulses bereit. Am Ende des Messkanals liegen mittels Multiplexer 60 die jeweiligen Lichtlaufzeiten von Lasertrigger bis Empfang des remittierten Lichtpulses 20 an. In einer Subtrahierstufe 62 wird die jeweilige Differenz von Lichtlaufzeit und Referenzzeit gebildet.

Das Ergebnis ist, da die TDC-Baustine 48, 50a-n im Referenzkanal und Messkanal gleichzeitig getriggert wurden, jeweils eine um interne Signalwege und sonstige Störungen bereinigte genaue Lichtlaufzeit zwischen Sensor 10 und Objekt 18. Referenzzeitmessung und Laufzeitmessung sind dabei aber entzerrt, um den einleitend erläuterten herkömmlichen Blindbereich durch Pulsüberlappungen zu eliminieren. Wird sendewie empfangsseitig eine Flanke der Pulse zur Bestimmung von Zeitpunkten benutzt, insbesondere die erste oder steigende Flanke, so ist die Messung gänzlich unabhängig vom weiteren Verlauf der Pulse und damit auch der Pulsbreite.

Es stehen nun am Ausgang der Subtrahierstufe 62 je nach Anzahl der Gruppen von Messempfangselementen 24 mehrere Messungen der Lichtlaufzeit unter Berücksichtigung der Referenz bereit. Die Anzahl kann durch Messwiederholung mit weiteren ausgesandten Lichtpulsen 14 noch erhöht werden. Vorzugsweise werden die einzelnen Messwerte gemeinsam statistisch ausgewertet, hier beispielhaft mittels Demultiplexer 64 nach und nach in einem Histogramm 66 kumuliert, das dann weiter ausgewertet wird. Dadurch können Effekte von Störgrößen, wie Fremdlicht oder Dunkelrauschen (DCR, dark count rate), unterdrückt und die Messgenauigkeit erhöht werden. Zahlreiche, beispielsweise mehrere tausend Messempfangselemente 24 oder Gruppen davon und auch je nach geforderter Ansprechzeit des Sensors 10 viele Messwiederholen sind denkbar.

Figur 6 zeigt ergänzend noch einen beispielhaften Signalverlauf an verschiedenen Punkten des Empfangssystems der Figur 5. Die Messung beginnt mit dem Lasertrigger 68. Die steigende Flanke des Lasertriggers 68 startet sowohl den TDC-Baustein 48 im Referenzkanal als auch die TDC-Bausteine 50a-n im Messkanal. Etwas verzögert setzt der Lichtsender 12 den Lasertrigger 68 in den optischen ausgesandten Lichtpuls 14 des optischen Sendesignals 70 um.

Die Referenzempfangselemente 24a registrieren den Referenzpuls 72a-m beziehungsweise dessen steigende Flanke mit einer gewissen Streuung. Durch UND-Verknüpfung wird daraus ein gemeinsames Stoppsignal 74 abgeleitet, das die Referenzzeitmessung in dem TDC-Baustein 48 beendet. Damit ist die Referenzzeit als Zählerstand 76 des TDC-Bausteins 48 bestimmt.

Nochmals später wird der remittierte Lichtpuls 20 in den Messempfangselementen 24 registriert. Vereinfachend ist nur das Empfangssignal 78 eines einzigen Messempfangselements 24 gezeigt, hier kann wie zu Figur 5 erläutert auch eine Zusammenfassung erfolgen. Die steigende Flanke des Empfangssignals 78 stoppt den zugehörigen TDC-Baustein 50a-n des Messkanals. Damit ist auch die Lichtlaufzeit als Zählerstand 80 des TDC-Bausteins 50a-n bestimmt. Sie wird dann wie zu Figur 5 erläutert, mit der Referenzzeit korrigiert.

Einige Gedanken der Erfindung zusammenfassend, würde naturgemäß an sich die beste Referenzmessung erreicht, wenn derselbe Kanal für Senden und Empfangen zuständig wäre. Da aber die Pulse nicht beliebig kurz werden können, realistisch sind hier etwa 500 ps, entsteht dann ein Blindbereich durch überlappende Pulse. Durch die beschriebene erfindungsgemäße Referenz- und Lichtlaufzeitmessung kann der Blindbereich eliminiert werden, indem jeweils das Ergebnis der Referenzzeitmessung von der Lichtlaufzeitmessung abgezogen wird. Durch Bestimmen von Zeitpunkten anhand von Flanken, insbesondere der ersten oder steigenden Flanke, wird eine Unabhängigkeit von der Pulsbreite erreicht.

## Patentansprüche

1. Optoelektronischer Sensor (10) zur Bestimmung der Entfernung eines Objekts (18) in einem Überwachungsbereich (20) nach einem pulsbasierten Lichtlaufzeitverfahren mit einem Lichtsender (12) zum Aussenden eines Lichtpulses (14), mit einem Lichtempfänger (22), der eine Vielzahl von Lawinenphotodiodenelementen (24, 24a) aufweist, die jeweils mit einer Vorspannung oberhalb einer Durchbruchspannung vorspannbar und somit in einem Geiger-Modus betreibbar sind, wobei mindestens ein Lawinenphotodiodenelement als Messempfangselement (24) ausgebildet ist und den von dem Objekt (18) remittierten Lichtpuls (20) empfängt und mindestens ein Lawinenphotodiodenelement als Referenzempfangselement (24a) ausgebildet ist und einen Teil des ausgesandten Lichtpulses innerhalb des Sensors (10) als Referenzpuls empfängt sowie mit einer Auswertungseinheit (26), die dafür ausgebildet ist, aus den Empfangssignalen des Messempfangselements (24) und des Referenzempfangselements (24a) eine Lichtlaufzeit zwischen Aussenden des Lichtpulses (14) und Empfangen des remittierten Lichtpulses (20) und daraus den Abstand des Objekts (18) zu bestimmen,
**dadurch gekennzeichnet,**
**dass** die Auswertungseinheit (26) dafür ausgebildet ist, mit einem elektrischen Startsignal eine Referenzzeitmessung und eine Lichtlaufzeitmessung zu beginnen, die Referenzzeitmessung mit Empfang des Referenzpulses auf dem Referenzempfangselement (24a) und die Lichtlaufzeitmessung mit Empfang des remittierten Lichtpulses (20) auf dem Messempfangselement (24) zu beenden und die Lichtlaufzeit als Differenz der Ergebnisse der Lichtlaufzeitmessung und der Referenzzeitmessung zu bestimmen.

2. Sensor (10) nach Anspruch 1,
wobei die Auswertungseinheit (26) dafür ausgebildet ist, die Lichtlaufzeitmessung mit einer Flanke des elektrischen Startsignals zu beginnen und/oder mit einer Flanke des remittierten Lichtpulses (20) zu beenden, insbesondere jeweils der ersten Flanke.

3. Sensor (10) nach Anspruch 1 oder 2,
wobei die Auswertungseinheit (26) dafür ausgebildet ist, die Referenzzeitmessung mit einer Flanke des elektrischen Startsignals zu beginnen und/oder mit einer Flanke des Referenzpulses zu beenden, insbesondere jeweils der ersten Flanke.

4. Sensor (10) nach einem der vorhergehenden Ansprüche,
wobei die Auswertungseinheit (26) dafür ausgebildet ist, eine Vielzahl von Lichtlaufzeitmessungen mit einer Vielzahl von Messempfangselementen (24) oder Gruppen von Messempfangselementen (24) durchzuführen und die derart ermittelten Lichtlaufzeiten gemeinsam auszuwerten, um den Abstand des Objekts (18) zu bestimmen.

5. Sensor (10) nach einem der vorhergehenden Ansprüche,
wobei die Auswertungseinheit (26) dafür ausgebildet ist, die Referenzlaufzeitmessung und Lichtlaufzeitmessung zu wiederholen und die derart ermittelten Lichtlaufzeiten gemeinsam auszuwerten, um den Abstand des Objekts (18) zu bestimmen.

6. Sensor (10) nach einem der vorhergehenden Ansprüche,
wobei eine Vielzahl von Referenzempfangselementen (24a) vorgesehen ist und die Auswertungseinheit (26) die Referenzzeitmessung beendet, sobald eine Mindestanzahl von Referenzempfangselementen (24a) den Referenzpuls empfangen hat.

7. Sensor (10) nach einem der vorhergehenden Ansprüche,
wobei eine Vielzahl von Referenzempfangselementen (24a) vorgesehen ist und die Auswertungseinheit (26) die Referenzzeitmessung mehrfach mit den Referenzempfangselementen (24a) oder Gruppen von Referenzempfangselementen (24a) durchführt.

8. Sensor (10) nach einem der vorhergehenden Ansprüche,
wobei die Auswertungseinheit (26) jeweils mindestens einen TDC (48, 50a-n) für die Referenzzeitmessung und die Lichtlaufzeitmessung aufweist.

9. Sensor (10) nach einem der vorhergehenden Ansprüche,
wobei in dem Sensor (10) ein Lichtrückführelement (28) angeordnet ist, um den Referenzpuls auf das Referenzempfangselement (24a) zu leiten.

10. Sensor (10) nach einem der vorhergehenden Ansprüche,
wobei das mindestens eine Referenzempfangselement (24a) durch eine optische Barriere (30) von den übrigen Lichtempfangselementen (24) separiert ist.

11. Verfahren zur Bestimmung der Entfernung eines Objekts (18) in einem Überwachungsbereich (20) nach einem pulsbasierten Lichtlaufzeitverfahren, bei dem ein Lichtpuls (14) ausgesandt und auf einem Lichtempfänger (22), der eine Vielzahl von Lawinenphotodiodenelementen (24, 24a) aufweist, die jeweils mit einer Vorspannung oberhalb einer Durchbruchspannung vorgespannt und somit in einem Geiger-Modus betrieben sind, mindestens ein Lawinenphotodiodenelement als Messempfangselement (24) den von dem Objekt (18) remittierten Lichtpuls (20) und mindestens ein Lawinenphotodiodenelement als Referenzempfangselement (24a) einen Teil des ausgesandten Lichtpulses (14) direkt, ohne Lichtweg über den Überwachungsbereich (20), als Referenzpuls empfängt, und aus den Empfangssignalen des Messempfangselements (24) und des Referenzempfangselements (24a) eine Lichtlaufzeit zwischen Aussenden des Lichtpulses (14) und Empfangen des remittierten Lichtpulses (20) und daraus der Abstand des Objekts (18) bestimmt wird,
**dadurch gekennzeichnet,**
**dass** mit einem elektrischen Startsignal eine Referenzzeitmessung und eine Lichtlaufzeitmessung beginnt, die Referenzzeitmessung mit Empfang des Referenzpulses auf dem Referenzempfangselement (24a) und die Lichtlaufzeitmessung mit Empfang des remittierten Lichtpulses (20) auf dem Messempfangselement (24) beendet wird und die Lichtlaufzeit als Differenz der Ergebnisse der Lichtlaufzeitmessung und der Referenzzeitmessung bestimmt wird.
